# EUROPÄISCHE PATENTSCHRIFT

(11) **EP 3 360 241 B1**
(45) Veröffentlichungstag und Bekanntmachung des Hinweises auf die Patenterteilung: **16.06.2021**
(21) Anmeldenummer: 16788014.5
(22) Anmeldetag: 26.09.2016
(51) Int. Cl.: H02M 3/158, H02J 1/10, H02M 3/335, H02M 1/00

(54) **GLEICHSPANNUNGSWANDLER UND VERFAHREN ZUM BETRIEB EINES GLEICHSPANNUNGSWANDLERS**
DC-TO-DC CONVERTER AND METHOD FOR OPERATING A DC-TO-DC CONVERTER
CONVERTISSEUR CONTINU-CONTINU ET PROCÉDÉ DE FONCTIONNEMENT D'UN CONVERTISSEUR CONTINU-CONTINU

(30) Priorität: 07.10.2015 DE 102015219338
(43) Veröffentlichungstag der Anmeldung: 15.08.2018
(73) Patentinhaber: Schaeffler Technologies AG & Co. KG, 91074 Herzogenaurach (DE)
(72) Erfinder: KOLB, Johannes, 75236 Kämpfelbach (DE); REMMLINGER, Jürgen, 76131 Karlsruhe (DE); GOMMERINGER, Mario, 78333 Stockach (DE); SCHMITT, Alexander, 76137 Karlsruhe (DE)
(86) Internationale Anmeldenummer: PCT/DE2016/200447
(87) Internationale Veröffentlichungsnummer: WO 2017/059855

(56) Entgegenhaltungen:
- EP-A1- 2 911 284
- DE-A1- 10 018 943

## Beschreibung

Die Erfindung betrifft einen Gleichspannungswandler zur Kopplung von mindestens drei Gleichspannungsnetzen, mit mindestens drei DC-DC-Stellern, die jeweils einen Gleichspannungsanschluss aufweisen, an dem eine auf ein gemeinsames Bezugspotential bezogene Gleichspannungsnetz-Spannung anliegt und durch den ein Gleichspannungsnetz-Strom fließt, wobei die DC-DC-Steller über einen ersten Zwischenkreiskondensator gekoppelt sind, welcher zwischen einem ersten Zwischenkreispotential und einem zweiten Zwischenkreispotential geschaltet ist, wobei das erste Zwischenkreispotential und das zweite Zwischenkreispotential von dem gemeinsamen Bezugspotential verschieden sind. Ferner betrifft die Erfindung ein Verfahren zum Betrieb eines derartigen Gleichspannungswandlers.

Aus der EP 2 911 284 A1 ist ein Gleichspannungswandler für eine Solaranalage bekannt, über welchen der Leistungsfluss von mehreren Solarmodulen zu einem Wechselrichter gesteuert werden kann. Dieser Gleichspannungswandler weist mehrere DC-DC-Steller auf, an denen jeweils eine Gleichspannungsnetz-Spannung gegenüber einem gemeinsamen Bezugspotential angelegt ist. Ferner umfasst der Gleichspannungswandler einen DC-DC-Steller, der eine weitere Gleichspannungsnetz-Spannung gegenüber dem gemeinsamen Bezugspotential erzeugt und dem Wechselrichter zuführt. Die DC-DC-Steller sind über einen Zwischenkreiskondensator gekoppelt, der zwischen einem ersten Zwischenkreispotential und einem zweiten Zwischenkreispotential geschaltet ist. Das erste Zwischenkreispotential und das zweite Zwischenkreispotential sind verschieden von dem gemeinsamen Bezugspotential, so dass an dem Zwischenkreiskondensator eine Spannung anliegen kann, die wesentlich kleiner ist als die jeweiligen Gleichspannungsnetz-Spannungen der Solarmodule bzw. des Wechselrichters. Bei diesem Gleichspannungswandler verringern sich die Schaltverluste in den DC-DC-Stellern aufgrund der geringen Spannung über dem Zwischenkreiskondensator. Allerdings hat es sich als nachteilig herausgestellt, dass die Gleichspannungsnetz-Spannung an dem Wechselrichter, welche im regulären Betrieb der Solaranlage eine Ausgangsspannung darstellt, abhängig vom Leistungsfluss in dem Gleichspannungswandler, insbesondere abhängig von den Gleichspannungsnetz-Spannungen der Solarmodule ist, so dass eine Einstellbarkeit dieser Ausgangsspannung nur eingeschränkt möglich ist.

Vor diesem Hintergrund stellt sich die Erfindung die Aufgabe, den Bereich, in welchem die einzelnen Gleichspannungsnetz-Spannungen eingestellt werden können, zu vergrößern.

Die Aufgabe wird gelöst durch einen Gleichspannungswandler zur Kopplung von mindestens drei Gleichspannungsnetzen, mit mindestens drei DC-DC-Stellern, die jeweils einen Gleichspannungsanschluss aufweisen, an dem eine auf ein gemeinsames Bezugspotential bezogene Gleichspannungsnetz-Spannung anliegt und durch den ein Gleichspannungsnetz-Strom fließt, wobei die DC-DC-Steller über einen ersten Zwischenkreiskondensator gekoppelt sind, welcher zwischen einem ersten Zwischenkreispotential und einem zweiten Zwischenkreispotential geschaltet ist, wobei das erste Zwischenkreispotential und das zweite Zwischenkreispotential von dem gemeinsamen Bezugspotential verschieden sind, und mit einem Zwischenkreis-Steller, über welchen das erste Zwischenkreispotential und/oder das zweite Zwischenkreispotential unabhängig von den Gleichspannungsnetz-Spannungen und den Gleichspannungsnetz-Strömen einstellbar ist.

Die DC-DC-Steller des Gleichspannungswandlers können über den ersten Zwischenkreiskondensator derart gekoppelt sein, dass an den DC-DC-Stellern eine über dem ersten Zwischenkreiskondensator anliegende erste Zwischenkreisspannung anliegt. Zusätzlich zu den DC-DC-Stellern, an welchen die einzelnen Gleichspannungsnetz-Spannungen der Gleichspannungsnetze anliegen, ist ein Zwischenkreis-Steller vorgesehen, durch welchen das erste Zwischenkreispotential und/oder das zweite Zwischenkreispotential, insbesondere in Bezug auf das gemeinsame Bezugspotential, eingestellt werden kann, ohne dass es erforderlich ist, eine oder mehrere der Gleichspannungsnetz-Spannungen oder Gleichspannungsnetz-Ströme zu verändern. Somit wird es durch den Zwischenkreis-Steller möglich, die einzelnen Gleichspannungsnetz-Spannungen unabhängig voneinander einzustellen. Folglich lassen sich die einzelnen Gleichspannungsnetz-Spannungen in einem wesentlich größeren Bereich frei einstellen.

Gemäß einer vorteilhaften Ausgestaltung ist zwischen dem zweiten Zwischenkreispotential und dem gemeinsamen Bezugspotential ein zweiter Zwischenkreiskondensator oder zwischen dem ersten Zwischenkreispotential und dem gemeinsamen Bezugspotential ein dritter Zwischenkreiskondensator geschaltet. Insofern weist der Gleichspannungswandler einen geteilten Zwischenkreis mit zwei in Serie geschalteten Zwischenkreiskondensatoren auf. Alternativ können das erste Zwischenkreispotential und das zweite Zwischenkreispotential nicht über einen Zwischenkreiskondensator mit dem gemeinsamen Bezugspotential gekoppelt sein, also können sie von dem gemeinsamen Bezugspotential getrennt sein, so dass ein Gleichspannungswandler mit einem schwebenden Zwischenkreis gebildet wird.

Bevorzugt ist zur Einstellung des ersten Zwischenkreispotentials und/oder des zweiten Zwischenkreispotentials eine über dem ersten Zwischenkreiskondensator anliegende Zwischenkreisspannung durch den Zwischenkreis-Steller unabhängig von den Gleichspannungsnetz-Spannungen und den Gleichspannungsnetz-Strömen einstellbar. Der Zwischenkreis-Steller kann mit dem ersten Zwischenkreispotential und dem zweiten Zwischenkreispotential verbunden sein, so dass die an dem ersten Zwischenkreiskondensator anliegende erste Zwischenkreisspannung unmittelbar über den Zwischenkreis-Steller eingestellt werden kann.

Bei einer Ausgestaltung des Gleichspannungswandlers mit einem zweiten Zwischenkreiskondensator zwischen dem zweiten Zwischenkreispotential und dem gemeinsamen Bezugspotential ist es vorteilhaft, wenn zur Einstellung des ersten Zwischenkreispotentials und/oder des zweiten Zwischenkreispotentials eine zweite Zwischenkreisspannung zwischen dem zweiten Zwischenkreispotential und dem gemeinsamen Bezugspotential durch den Zwischenkreis-Steller unabhängig von den Gleichspannungsnetz-Spannungen und den Gleichspannungsnetz-Strömen einstellbar ist. Bei einer derartigen Ausgestaltung kann über den Zwischenkreis-Steller das erste Zwischenkreispotential und/oder das zweite Zwischenkreispotential verändert werden.

Bei einer Ausgestaltung des Gleichspannungswandlers mit einem dritten Zwischenkreiskondensator zwischen dem ersten Zwischenkreispotential und dem gemeinsamen Bezugspotential ist es vorteilhaft, wenn zur Einstellung des ersten Zwischenkreispotentials und/oder des zweiten Zwischenkreispotentials eine dritte Zwischenkreisspannung zwischen dem ersten Zwischenkreispotential und dem gemeinsamen Bezugspotential durch den Zwischenkreis-Steller unabhängig von den Gleichspannungsnetz-Spannungen und den Gleichspannungsnetz-Strömen einstellbar ist. Bei einer derartigen Ausgestaltung kann über den Zwischenkreis-Steller das erste Zwischenkreispotential und/oder das zweite Zwischenkreispotential verändert werden.

Gemäß einer vorteilhaften Ausgestaltung ist vorgesehen, dass der Zwischenkreis-Steller mit dem gemeinsamen Bezugspotential verbunden ist, so dass ein Bypass-Gleichstrom über den Zwischenkreis-Steller in Richtung des gemeinsamen Bezugspotentials und umgekehrt fließen kann, welcher insbesondere nicht durch die DC-DC-Steller des Gleichspannungswandlers fließt.

Eine bevorzugte Ausgestaltung sieht vor, dass an dem Zwischenkreis-Steller eine Gleichspannungsnetz-Spannung anliegt und der Zwischenkreis-Steller eine Potentialtrennung aufweist. Über den Zwischenkreis-Steller mit Potentialtrennung kann Energie zwischen dem Zwischenkreis und einem Gleichspannungsnetzanschluss des Gleichspannungswandlers übertragen werden, wobei die Potentiale des Zwischenkreises von den an dem Gleichspannungsnetzanschluss des Gleichspannungswandlers anliegenden Potentialen getrennt sind. Bevorzugt ist der Zwischenkreis-Steller ein Ein-Quadranten-Steller oder ein Zwei-Quadraten-Steller mit Potentialtrennung. Beispielsweise kann der Zwischenkreis-Steller einen Transformator zur Potentialtrennung mit einer Primärseite und einer Sekundärseite aufweisen, wobei sowohl auf der Primärseite als auch auf der Sekundärseite eine Vollbrückenschaltung vorgesehen ist. Weitere beispielhafte Ausgestaltungen des Zwischenkreis-Stellers sind Sperrwandler, Eintaktflusswandler, Gegentaktflusswandler oder Resonanzwandler.

Alternativ kann der Zwischenkreis-Steller mit dem ersten Zwischenkreispotential, dem zweiten Zwischenkreispotential und dem gemeinsamen Bezugspotential verbunden sein. Hierbei ist es nicht erforderlich, dass der Zwischenkreis-Steller eine Potentialtrennung aufweist.

Gemäß einer weiteren Alternative kann der Zwischenkreis-Steller mit einem der Gleichspannungsnetzanschlüsse, dem ersten Zwischenkreispotential und dem gemeinsamen Bezugspotential verbunden sein.

Gemäß einer weiteren Alternative kann der Zwischenkreis-Steller mit einem der Gleichspannungsnetzanschlüsse, dem zweiten Zwischenkreispotential und dem gemeinsamen Bezugspotential verbunden sein.

Es ist bevorzugt, wenn der Zwischenkreis-Steller als Halbbrückenschaltung ausgebildet ist. Der Zwischenkreis-Steller kann zwei in Serie geschaltete Halbleiterschalter aufweisen, wobei ein Mittelpunkt zwischen den beiden Halbleiterschaltern, bevorzugt über eine Drossel, mit einem ersten Potential der drei Potentiale verbunden ist. Die anderen beiden Potentiale sind jeweils mit einem der beiden Halbleiterschalter des Zwischenkreis-Stellers verbunden, so dass das erste Potential wahlweise mit einem der anderen beiden Potentiale verbunden werden kann. Alternativ kann der Zwischenkreis-Steller als Ladungspumpe, CUK-Wandler, Zeta-Wandler oder SEPIC-Wandler ausgebildet sein.

Eine vorteilhafte Ausgestaltung sieht vor, dass die DC-DC-Steller als Halbbrückenschaltungen ausgebildet sind. Die DC-DC-Steller können einen ersten Halbleiterschalter und einen zweiten Halbleiterschalter aufweisen, welche in Serie geschaltet sind, wobei der erste Halbleiterschalter mit dem ersten Zwischenkreispotential verbunden ist, der zweite Halbleiterschalter mit dem zweiten Zwischenkreispotential verbunden ist und ein mit dem ersten Halbleiterschalter und dem zweiten Halbleiterschalter verbundener Mittelpunkt, insbesondere über eine Drossel, mit dem Gleichspannungsnetzanschluss des DC-DC-Stellers verbunden ist. An dem Gleichspannungsnetzanschluss kann eine Gleichspannungsnetz-Spannung gegenüber dem gemeinsamen Bezugspotential anliegen.

Gemäß einer weiteren bevorzugten Ausgestaltung weist der Gleichspannungswandler mehr als drei, insbesondere vier, fünf, sechs, sieben, acht, neun oder zehn DC-DC-Steller auf, die jeweils einen Gleichspannungsnetzanschluss aufweisen, an dem eine auf das gemeinsame Bezugspotential bezogene Gleichspannungsnetz-Spannung anliegt und durch den ein Gleichspannungsnetz-Strom fließt. Über die mehr als drei DC-DC-Steller können mehr als drei Gleichspannungsnetze, beispielsweise Energiequellen, Energiespeicher oder Energieverbraucher, angebunden werden.

Gelöst wird die eingangs genannte Aufgabe ferner durch ein Verfahren zum Betrieb eines Gleichspannungswandlers zur Kopplung von mindestens drei Gleichspannungsnetzen mit mindestens drei DC-DC-Stellern, die jeweils einen Gleichspannungsanschluss aufweisen, an dem eine auf ein gemeinsames Bezugspotential bezogene Gleichspannungsnetz-Spannung anliegt und durch den ein Gleichspannungsnetz-Strom geleitet wird, wobei die DC-DC-Steller über einen ersten Zwischenkreiskondensator gekoppelt sind, welcher zwischen einem ersten Zwischenkreispotential und einem zweiten Zwischenkreispotential geschaltet ist, wobei das erste Zwischenkreispotential und das zweite Zwischenkreispotential von dem gemeinsamen Bezugspotential verschieden sind, wobei das erste Zwischenkreispotential und/oder das zweite Zwischenkreispotential unabhängig von den Gleichspannungsnetz-Spannungen und den Gleichspannungsnetz-Strömen über einen Zwischenkreis-Steller eingestellt wird.

Bei dem Verfahren können dieselben Vorteile erreicht werden, wie sie bereits im Zusammenhang mit dem Gleichspannungswandler beschrieben worden sind.

Ferner können bei dem Verfahren die im Zusammenhang mit dem Gleichspannungswandler beschriebenen vorteilhaften Merkmale allein oder in Kombination Verwendung finden.

Weitere Einzelheiten und Vorteile der Erfindung sollen nachfolgend anhand der in den Zeichnungen dargestellten Ausführungsbeispiele beschrieben werden. Die Zeichnungen illustrieren dabei lediglich beispielhafte Ausführungsformen der Erfindung, welche den Erfindungsgedanken nicht einschränken. Hierin zeigt:
- Fig. 1: ein Schaltbild eines Gleichspannungswandlers gemäß einem ersten Ausführungsbeispiel,
- Fig. 2: ein Schaltbild eines Zwischenkreis-Stellers gemäß einem ersten Ausführungsbeispiel,
- Fig. 3: ein Schaltbild eines Gleichspannungswandlers gemäß einem zweiten Ausführungsbeispiel,
- Fig. 4: ein Schaltbild eines Gleichspannungswandlers gemäß einem dritten Ausführungsbeispiel,
- Fig. 5: ein Schaltbild eines Zwischenkreis-Stellers gemäß einem zweiten Ausführungsbeispiel.

In den verschiedenen Figuren sind gleiche Teile stets mit den gleichen Bezugszeichen versehen und werden daher in der Regel auch jeweils nur einmal benannt bzw. erwähnt.

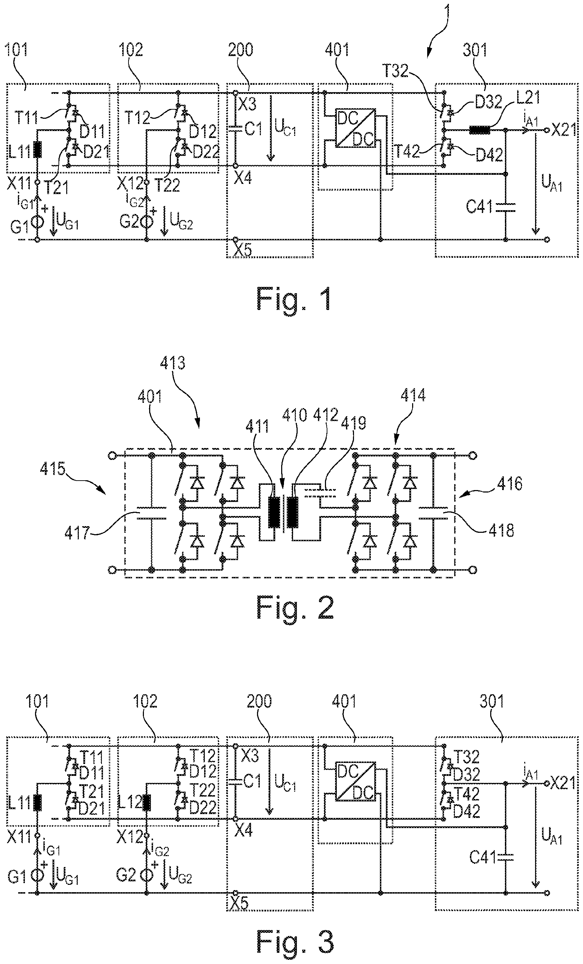

In der Fig. 1 ist ein Schaltbild eines Gleichspannungswandlers 1 gemäß einem ersten Ausführungsbeispiel dargestellt. Über den Gleichspannungswandler 1 können mehrere Gleichspannungsnetze gekoppelt werden. Im vorliegenden Fall sind ein erstes und ein zweites jeweils eine Energiequelle G1, G2 aufweisendes Gleichspannungsnetz über den Gleichspannungswandler 1 mit einem dritten Gleichspannungsnetz verbunden. Als Energiequellen G1, G2 an den Gleichspannungsnetzanschlüssen X11, X12 können einerseits Energiespeicher, wie beispielsweise Batterien oder Kondensatoren, andererseits Energiewandler, wie beispielsweise Brennstoffzellen, Solarzellen oder Generatoren, verwendet werden. Zum Anschluss der Energiequellen G1, G2 weist der Gleichspannungswandler 1 mehrere individuelle Gleichspannungsnetzanschlüsse X11, X12 auf, an welchen eine Gleichspannungsnetz-Spannung UG1, UG2 gegenüber einem gemeinsamen Bezugspotential X5 anliegt. In den ersten Gleichspannungsnetzanschluss X11 und den zweiten Gleichspannungsnetzanschluss X12 fließen jeweils individuelle Gleichspannungsnetz-Ströme IG1, IG2. Zusätzlich weist der Gleichspannungswandler 1 den dritten Gleichspannungsnetzanschluss X21 auf, der mit dem dritten Gleichspannungsnetz verbunden ist. An dem dritten Gleichspannungsnetzanschluss X21 und dem gemeinsamen Bezugspotential X5 ist ein in den Figuren nicht dargestellter Wechselrichter angeschlossen, beispielsweise für die Anbindung einer elektrischen Maschine oder für die Anbindung an das öffentliche Stromnetz.

Die Gleichspannungsnetzanschlüsse X11, X12, X21 des Gleichspannungswandlers können grundsätzlich wahlweise mit einem Gleichspannungsnetz verbunden werden, welches eine Energiequelle oder eine Energiesenke oder beides aufweist.

Der Gleichspannungswandler 1 weist einen schwebenden Zwischenkreis 200 auf, über welchen mehrere DC-DC-Steller 101, 102, 301 des Gleichspannungswandlers 1 gekoppelt sind. Optional können neben den dargestellten drei DC-DC-Stellern 101, 102, 301 weitere DC-DC-Steller mit dem Zwischenkreis 200 verbunden sein.

Der Zwischenkreis 200 weist ein erstes Zwischenkreispotential X3 und ein zweites Zwischenkreispotential X4 auf, zwischen denen ein Zwischenkreiskondensator C1 geschaltet ist, in welchem elektrische Energie bei Betrieb des Gleichspannungswandlers 1 zwischengespeichert werden kann. Die beiden Zwischenkreispotentiale X3, X4 sind von dem gemeinsamen Bezugspotential X5 verschieden. Diese schwebende Ausgestaltung des Zwischenkreises 200 bietet den Vorteil, dass über dem Zwischenkreiskondensator C1 eine Zwischenkreisspannung UC1 anliegt, welche wesentlich geringer ist als die Eingangsspannungen UG1, UG2 und die Ausgangsspannung UA1 des Gleichspannungswandlers 1. Hierdurch werden Schaltverluste in den DC-DC-Stellern 101, 102, 301 reduziert und es wird möglich, für eine geringere Leistung ausgelegte, kostengünstigere Bauelemente in den DC-DC-Stellern 101, 102, 301 zu verwenden.

Die DC-DC-Steller 101, 102, 301 sind bei diesem Ausführungsbeispiel als Halbbrückenschaltungen ausgestaltet. Sie weisen jeweils drei Pole X11, X12, X21, X3, X4 auf. Ein erster DC-DC-Steller 101 umfasst zwei in Serie geschaltete Halbleiterschalter T11, T21. Jeweils parallel zu den Halbleiterschaltern T11, T21 ist eine Freilaufdiode D11, D21 geschaltet, welche die Halbleiterschalter T11, T21 vor Überspannungen schützt. Ferner weist der erste DC-DC-Steller 101 eine Drossel L11, welche zwischen dem ersten Gleichspannungsnetzanschluss X11 und einem Mittelpunkt der Serienschaltung der beiden Halbleiterschalter T11, T21 angeordnet ist. An dem ersten DC-DC-Steller 101 ist eine erste Eingangsspannung UG1 gegenüber dem gemeinsamen Bezugspotential X5 angelegt. Je nach Schaltstellung der Halbleiterschalter T11, T21 kann der erste Gleichspannungsnetzanschluss X11 mit dem ersten Zwischenkreispotential X3 oder dem zweiten Zwischenkreispotential X4 verbunden werden. Auch ein zweiter DC-DC-Steller 102 weist zwei in Serie geschaltete Halbleiterschalter T12, T22 auf. Zu den Halbleiterschaltern T12, T22 sind Freilaufdioden D12, D22 parallel geschaltet vorgesehen. Im Gegensatz zu dem ersten DC-DC-Steller 101 weist der zweite DC-DC-Steller 102 keine mit dem zweiten Gleichspannungsnetzanschluss X12 verbundene Drossel auf. Der zweite Gleichspannungsnetzanschluss X12 ist unmittelbar mit dem Mittelpunkt der Serienschaltung der beiden Halbleiterschalter T12, T22 verbunden. Der dritte DC-DC-Steller 301 ist ebenfalls als Halbbrückenschaltung ausgestaltet und weist insofern drei Pole X3, X4, X21 auf. Der dritte DC-DC-Steller 301 umfasst eine Serienschaltung zweier Halbleiterschalter T32, T42. Jeweils parallel zu den Halbleiterschaltern T32, T42 ist eine Freilaufdiode D32, D42 geschaltet. Ferner umfasst der dritte DC-DC-Steller 301 eine Drossel L21, welche zwischen dem Mittelpunkt der Serienschaltung der Transistoren T32, T42 und dem dritten Gleichspannungsnetzanschluss X21 geschaltet ist. Am Ausgang des Ausgangsstellers 301 ist ferner ein Kondensator C41 vorgesehen, welcher zwischen dem dritten Gleichspannungsnetzanschluss X21 und dem gemeinsamen Bezugspotential X5 geschaltet ist. Über dem Kondensator C41 liegt die eine Gleichspannungsnetz-Spannung UA1 des Gleichspannungswandlers 1 an. Über den dritten Gleichspannungsnetzanschluss X21 fließt der Gleichspannungsnetz-Strom IA1 des dritten Gleichspannungsnetzes.

Ohne den Zwischenkreis-Steller 401 ist bei diesem Gleichspannungswandler 1 die dritte Gleichspannungsnetz-Spannung UA1 zwischen dem dritten Gleichspannungsnetzanschluss X21 und dem gemeinsamen Bezugspotential X5 grundsätzlich abhängig von der ersten Gleichspannungsnetz-Spannung UG1 zwischen dem ersten Gleichspannungsnetzanschluss X11 und dem gemeinsamen Bezugspotential X5 sowie der zweiten Gleichspannungsnetz-Spannung UG2 zwischen dem zweiten Gleichspannungsnetzanschluss X12 und dem gemeinsamen Bezugspotential X5 sowie von dem ersten Gleichspannungsnetz-Strom IG1 und dem zweiten Gleichspannungsnetz-Strom IG2. Um den Bereich zu vergrößern, in welchem die dritte Gleichspannungsnetz-Spannung UA1 eingestellt werden kann, ist bei dem Gleichspannungswandler 1 ein Zwischenkreis-Steller 401 vorgesehen, über welchen das erste Zwischenkreispotential X3 und/oder das zweite Zwischenkreispotential X4 unabhängig von den Gleichspannungsnetz-Spannungen UG1, UG2, UA1 und den Gleichspannungsnetz-Strömen IG1, IG2, IA1 einstellbar ist. Gemäß dem ersten Ausführungsbeispiel ist der Zwischenkreis-Steller 401 mit dem ersten Zwischenkreispotential X3 und dem zweiten Zwischenkreispotential X4 verbunden, so dass der Zwischenkreis-Steller 401 die über den Zwischenkreiskondensator C1 anliegende Zwischenkreisspannung UC1 unmittelbar einstellen kann. Ferner ist der Zwischenkreis-Steller 401 mit dem dritten Gleichspannungsnetzanschluss X21 und dem gemeinsamen Bezugspotential X5 verbunden. Insofern liegt an dem Zwischenkreis-Steller 401 die dritte Gleichspannungsnetz-Spannung UA1 an. Um unerwünschte Rückkopplungen zu vermeiden, weist der Zwischenkreis-Steller 401 eine Potentialtrennung auf.

Ein Ausführungsbeispiel eines Zwischenkreis-Stellers 401 mit Potentialtrennung ist in der **Fig. 2** dargestellt. Zur Potentialtrennung weist der Zwischenkreis-Steller 401 einen Transformator 410 mit einer primärseitigen Wicklung 411 und einer sekundärseitigen Wicklung 412 auf. Die primärseitige Wicklung 411 des Transformators 410 ist über eine Vollbrückenschaltung 413 mit dem primärseitigen Anschluss 415 des Zwischenkreis-Stellers 401 verbunden. Die sekundärseitige Wicklung 412 ist über eine Vollbrückenschaltung 414 mit dem sekundärseitigen Anschluss 416 des Zwischenkreis-Stellers 401 verbunden. Am sekundärseitigen Anschluss 416 und am primärseitigen Anschluss 415 sind zusätzliche Kondensatoren 417, 418 vorgesehen. Optional kann ein Kondensator 419 in Serie mit der primärseitigen oder der sekundärseitigen Wicklung 412 des Transformators 410 geschaltet werden, um einen resonant schaltenden Betrieb des Zwischenkreis-Stellers 401 zu ermöglichen. Dieser Zwischenkreis-Steller 401 ist als Zwei-Quadranten-Steller ausgestaltet, welcher einen bidirektionalen Energieaustausch zwischen dem primärseitigen Anschluss 415 und dem sekundärseitigen Anschluss 416 ermöglicht. Die Streuinduktivität des Transformators 410 wird zur Stromeinprägung genutzt. Optional kann eine zusätzliche Induktivität in Serie zu der primärseitigen Wicklung 411 oder der sekundärseitigen Wicklung 412 vorgesehen werden.

Abweichend von dem in Fig. 1 gezeigten Ausführungsbeispiel kann an den primärseitigen Anschluss 415 des Zwischenkreis-Stellers 401 eine Eingangsspannung UG1, UG2 angelegt werden. In diesem Fall werden der jeweilige Gleichspannungsnetzanschluss X11, X12 und das gemeinsame Bezugspotential X5 mit dem Zwischenkreis-Steller 401 verbunden. Der Zwischenkreis-Steller 401 sollte auch in diesem Fall eine Potentialtrennung aufweisen.

Die **Fig. 3** zeigt ein zweites Ausführungsbeispiel eines Gleichspannungswandlers 1 mit einem schwebenden Zwischenkreis 200 und einem Zwischenkreis-Steller 401. Im Unterschied zu dem Gleichspannungswandler 1 gemäß dem ersten Ausführungsbeispiel weist der zweite DC-DC-Steller 102 eine Drossel L12 auf, welche zwischen dem zweiten Gleichspannungsnetzanschluss X12 und dem Mittelpunkt der Serienschaltung der Halbleiterschalter T12, T22 geschaltet ist. Insofern sind der erste DC-DC-Steller 101 und der zweite DC-DC-Steller 102 identisch ausgebildet. Ein weiterer Unterschied zu dem Gleichspannungswandler 1 des ersten Ausführungsbeispiels besteht darin, dass der dritte DC-DC-Steller 301 ohne eine Drossel ausgestaltet ist. Der Mittelpunkt der Serienschaltung der Halbleiterschalter T32, T42 ist unmittelbar mit dem dritten Gleichspannungsnetzanschluss X21 verbunden.

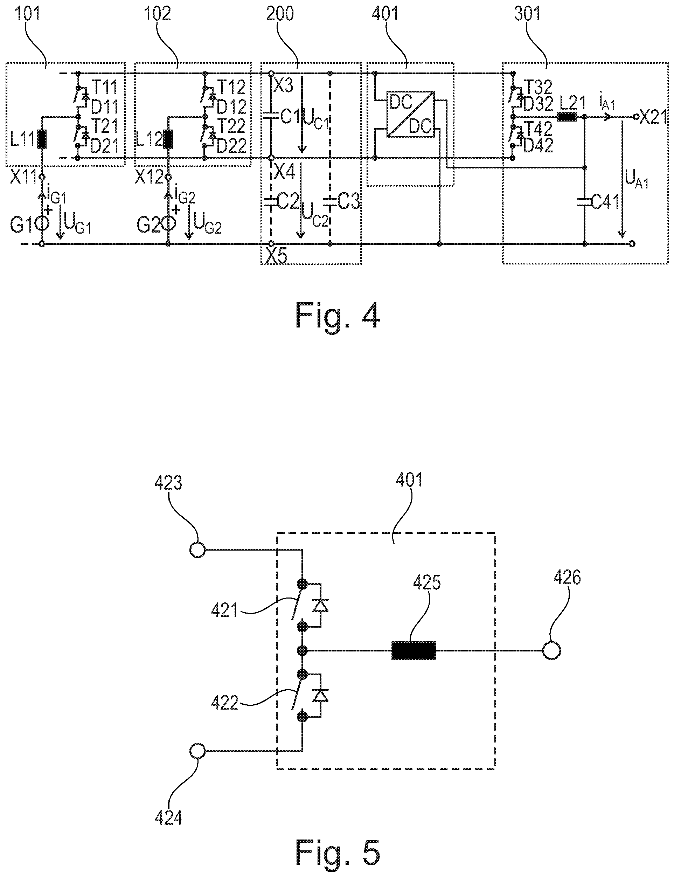

In der **Fig. 4** ist ein drittes Ausführungsbeispiel eines Gleichspannungswandlers 1 gezeigt. Dieser Gleichspannungswandler 1 weist einen geteilten Zwischenkreis 200 mit einem ersten Zwischenkreiskondensator C1 und einem in Serie zu dem ersten Zwischenkreiskondensator C1 geschalteten weiteren Zwischenkreiskondensator C2, C3 auf. Der weitere Zwischenkreiskondensator kann entweder zwischen dem zweiten Zwischenkreispotential X4 und dem gemeinsamen Bezugspotential X5 geschaltet sein und wird im Folgenden als zweiter Zwischenkreiskondensator C2 bezeichnet oder er ist zwischen dem ersten Zwischenkreispotential X3 und dem gemeinsamen Bezugspotential X5 verschaltet und wird im Folgenden als dritter Zwischenkreiskondensator C3 bezeichnet.

Bei dem Gleichspannungswandler 1 gemäß dem dritten Ausführungsbeispiel sind der erste und der zweite DC-DC-Steller 101, 102 als Halbbrücken ausgestaltet, die eine jeweils eine mit dem Gleichspannungsnetzanschluss X11, X12 verbundene Drossel L11, L12 zur Stromeinprägung aufweisen. Der dritte DC-DC-Steller 301 ist als Halbbrückenschaltung mit zwei in Serie geschalteten Halbleiterschaltern T22, T42 und einer mit dem dritten Gleichspannungsnetzanschluss X21 verbundenen Drossel L21 ausgebildet.

Abweichend von der Darstellung in Fig. 4 kann der Zwischenkreis-Steller 401 parallel zu dem zweiten Zwischenkreiskondensator C2 oder parallel zu dem dritten Zwischenkreiskondensator C3 verbunden sein, so das entweder die über dem zweiten Zwischenkreiskondensator C2 anliegende zweite Zwischenkreisspannung UC2 oder die über dem dritten Zwischenkreiskondensator C3 anliegende dritte Zwischenkreisspannung UC3 eingestellt werden kann. Wird der Zwischenkreis-Steller 401 beispielsweise mit dem zweiten Zwischenkreispotential X4 und dem gemeinsamen Bezugspotential X5 verbunden, so kann das zweite Zwischenkreispotential X4 unabhängig von den Gleichspannungsnetz-Spannungen UG1, UG2, UA1 und den Gleichspannungsnetz-Strömen IG1, IG2, IA1 eingestellt werden. Wird der Ausgang des Zwischenkreis-Stellers 401 mit dem ersten Zwischenkreispotential X3 und dem gemeinsamen Bezugspotential X5 verbunden, so kann das erste Zwischenkreispotential X3 unabhängig von den Gleichspannungsnetz-Spannungen UG1, UG2, UA1 und den Gleichspannungsnetz-Strömen IG1, IG2, IA1 eingestellt werden.

Bei den vorstehend beschriebenen Gleichspannungswandlern 1 kann das gemeinsame Bezugspotential ein gemeinsames neutrales Bezugspotential, ein gemeinsames positives Bezugspotential oder ein gemeinsames negatives Bezugspotential sein.

Bei den vorstehend beschriebenen Gleichspannungswandlern 1 kann alternativ ein Zwischenkreis-Steller 401 mit einem abweichenden Aufbau zur Verwendung kommen. Beispielhaft soll nachfolgend ein weiterer möglicher Aufbau eines Zwischenkreis-Stellers 401 anhand der Darstellung in **Fig. 5** erläutert werden. Der Zwischenkreis-Steller 401 gemäß dem in der Fig. 5 gezeigten zweiten Ausführungsbeispiel ist als Halbbrückenschaltung ausgebildet. Er weist zwei in Serie geschaltete Halbleiterschalter 412, 422 auf, wobei ein Mittelpunkt zwischen den beiden Halbleiterschaltern 412, 422 über eine Drossel 425 mit einem Eingangspol 426 verbunden ist. Die Ausgangspole 423, 424 sind jeweils mit einem der beiden Halbleiterschalter 421, 422 des Zwischenkreis-Stellers 401 verbunden. Bei dem Ausführungsbeispiel gemäß Fig. 4 kann der als Halbbrückenschaltung ausgestaltete Zwischenkreis-Steller 401 mit dem ersten Zwischenkreispotential X3, dem zweiten Zwischenkreispotential X4 und dem gemeinsamen Bezugspotential X5 verbunden werden.

Gemäß einer ersten Alternative ist der Eingangspol 426 mit dem zweiten Zwischenkreispotential X4 verbunden, ein erster Ausgangspol 423 ist mit dem ersten Zwischenkreispotential X3 verbunden und der zweite Ausgangspol 424 ist mit dem gemeinsamen Bezugspotential X5 verbunden.

Eine zweite Alternative sieht vor, dass der Eingangspol 426 mit einem der Gleichspannungsnetzanschlüsse X11, X12, X21 verbunden ist, der erste Ausgangspol 423 mit dem ersten Zwischenkreispotential X3 verbunden ist und der zweite Ausgangspol 424 mit dem gemeinsamen Bezugspotential X5 verbunden ist.

Gemäß einer dritten Alternative ist der Eingangspol 426 mit dem zweiten Zwischenkreispotential X4 verbunden, der erste Ausgangspol 423 ist mit einem der Gleichspannungsnetzanschlüsse X11, X12, X21 verbunden und der zweite Ausgangspol 424 ist mit dem gemeinsamen Bezugspotential X5 verbunden.

Bei den vorstehend beschriebenen Gleichspannungswandlern 1 kann der Eingangssteller 101, 102, der Ausgangssteller 301 und/oder der Zwischenkreis-Steller 301 alternativ als mehrphasiger Steller mit mehreren parallel geschalteten Halbbrückenschaltungen ausgebildet sein. Durch die Verwendung mehrphasiger Steller kann die Stromwelligkeit verringert werden.

Bei den vorstehend beschriebenen Gleichspannungswandlern 1 können die Halbleiterschalter T11, T21, T12, T22, T32, T42 als Leistungshalbleiterschalter, insbesondere als MOSFET, IGBT, JFET oder als Bipolartransistor ausgebildet sein. Es ist möglich, in einzelnen Zweigen der Halbbrückenschaltungen den jeweiligen Halbleiterschalter durch eine Diode zu ersetzen, insbesondere in solchen Anwendungen, in denen in dem jeweiligen Zweig der Halbbrückenschaltung ein unidirektionaler Stromfluss zu erwarten ist. Ebenso können bei unidirektionalem Stromfluss bestimme Dioden D11, D21, D22, D32, D42 entfallen. Das vorgenannte gilt ebenso für den eine Ausgestaltung des Zwischenkreis-Stellers mit einer Halbbrückenschaltung.

Die anhand der Zeichnungen erläuterten Ausführungsbeispiele von Gleichspannungswandlern 1 zur Kopplung von mindestens drei Gleichspannungsnetzen umfassen jeweils mindestens drei DC-DC-Steller 101, 102, 301, die jeweils einen Gleichspannungsnetzanschluss X11, X12, X21 aufweisen, an dem eine auf ein gemeinsames Bezugspotential X5 bezogene Gleichspannungsnetz-Spannung UG1, UG2, UA1 anliegt und durch den ein Gleichspannungsnetz-Strom IG1, IG2, IA1 fließt. Die DC-DC-Steller 101, 102, 301 sind über einen ersten Zwischenkreiskondensator C1 gekoppelt, welcher zwischen einem ersten Zwischenkreispotential X3 und einem zweiten Zwischenkreispotential X4 geschaltet ist, wobei das erste Zwischenkreispotential X3 und das zweite Zwischenkreispotential X4 von dem gemeinsamen Bezugspotential X5 verschieden sind. Ferner weisen die Gleichspannungswandler 1 einen Zwischenkreis-Steller 401 auf, über welchen das erste Zwischenkreispotential X3 und/oder das zweite Zwischenkreispotential X4 unabhängig von den Gleichspannungsnetz-Spannungen UG1, UG2, UA1 und den Gleichspannungsnetz-Strömen IG1, IG2, IA1 einstellbar ist. Hierdurch können die jeweiligen Gleichspannungsnetz-Spannungen UG1, UG2, UA1 in einem wesentlich größeren Bereich frei eingestellt werden.

### Bezugszeichenliste

- 1: Gleichspannungswandler
- 101: erster DC-DC-Steller
- 102: zweiter DC-DC-Steller
- 200: Zwischenkreis
- 301: dritter DC-DC-Steller
- 401: Zwischenkreis-Steller
- 410: Transformator
- 411: Wicklung
- 412: Wicklung
- 413: Vollbrückenschaltung
- 414: Vollbrückenschaltung
- 415: primärseitiger Anschluss
- 416: sekundärseitiger Anschluss
- 417: Kondensator
- 418: Kondensator
- 419: Kondensator

- 421: Halbleiterschalter
- 422: Halbleiterschalter
- 423: Ausgangspol
- 424: Ausgangspol
- 425: Drossel
- 426: Eingangspol

- C1: erster Zwischenkreiskondensator
- C2: zweiter Zwischenkreiskondensator
- C3: dritter Zwischenkreiskondensator
- D11: Freilaufdiode
- D21: Freilaufdiode
- D12: Freilaufdiode
- D22: Freilaufdiode
- D32: Freilaufdiode
- D42: Freilaufdiode
- G1: Energiequelle
- G2: Energiequelle
- IA1: dritter Gleichspannungsnetz-Strom
- IG1: erster Gleichspannungsnetz-Strom
- IG2: zweiter Gleichspannungsnetz-Strom
- L11: Drossel
- L12: Drossel
- L21: Drossel
- UA1: dritte Gleichspannungsnetz-Spannung
- UG1: erste Gleichspannungsnetz-Spannung
- UG2: zweite Gleichspannungsnetz-Spannung
- T11: Halbleiterschalter
- T21: Halbleiterschalter
- T12: Halbleiterschalter
- T22: Halbleiterschalter
- T32: Halbleiterschalter
- T42: Halbleiterschalter
- X11: erster Gleichspannungsnetzanschluss
- X12: zweiter Gleichspannungsnetzanschluss
- X21: dritter Gleichspannungsnetzanschluss
- X3: erstes Zwischenkreispotential
- X4: zweites Zwischenkreispotential
- X5: gemeinsames Bezugspotential

## Patentansprüche

1. Gleichspannungswandler zur Kopplung von mindestens drei Gleichspannungsnetzen,
- mit mindestens drei DC-DC-Stellern (101, 102, 301), die jeweils einen Gleichspannungsnetzanschluss (X11, X12, X21) aufweisen, an dem eine auf ein gemeinsames Bezugspotential (X5) bezogene Gleichspannungsnetz-Spannung (UG1, UG2, UA1) anliegt und durch den ein Gleichspannungsnetz-Strom (IG1, IG2, IA1) fließt,
- wobei die DC-DC-Steller (101, 102, 301) über einen ersten Zwischenkreiskondensator (C1) gekoppelt sind, welcher zwischen einem ersten Zwischenkreispotential (X3) und einem zweiten Zwischenkreispotential (X4) geschaltet ist, wobei das erste Zwischenkreispotential (X3) und das zweite Zwischenkreispotential (X4) von dem gemeinsamen Bezugspotential (X5) verschieden sind,
**gekennzeichnet durch**
einen Zwischenkreis-Steller (401), über welchen das erste Zwischenkreispotential (X3) und/oder das zweite Zwischenkreispotential (X4) unabhängig von den Gleichspannungsnetz-Spannungen (UG1, UG2, UA1) und den Gleichspannungsnetz-Strömen (IG1, IG2, IA1) einstellbar ist.

2. Gleichspanungswandler nach Anspruch 1, **dadurch gekennzeichnet, dass** zwischen dem zweiten Zwischenkreispotential (X4) und dem gemeinsamen Bezugspotential (X5) ein zweiter Zwischenkreiskondensator (C2) oder zwischen dem ersten Zwischenkreispotential (X3) und dem gemeinsamen Bezugspotential (X5) ein dritter Zwischenkreiskondensator (C3) geschaltet ist.

3. Gleichspannungswandler nach einem der vorhergehenden Ansprüche, **dadurch gekennzeichnet, dass** zur Einstellung des ersten Zwischenkreispotentials (X3) und/oder des zweiten Zwischenkreispotentials (X4) eine über dem ersten Zwischenkreiskondensator (C1) anliegende erste Zwischenkreisspannung (UC1) durch den Zwischenkreis-Steller (401) unabhängig von den Gleichspannungsnetz-Spannungen (UG1, UG2, UA1) und den Gleichspannungsnetz-Strömen (IG1, IG2, IA1) einstellbar ist.

4. Gleichspannungswandler nach Anspruch 2, **dadurch gekennzeichnet, dass** zur Einstellung des zweiten Zwischenkreispotentials (X4) eine zweite Zwischenkreisspannung (UC2) zwischen dem zweiten Zwischenkreispotential (X4) und dem gemeinsamen Bezugspotential (X5) durch den Zwischenkreis-Steller (401) unabhängig von den Gleichspannungsnetz-Spannungen (UG1, UG2, UA1) und den Gleichspannungsnetz-Strömen (IG1, IG2, IA1) einstellbar ist oder dass zur Einstellung des ersten Zwischenkreispotentials (X3) eine dritte Zwischenkreisspannung (UC3) zwischen dem ersten Zwischenkreispotential (X3) und dem gemeinsamen Bezugspotential (X5) durch den Zwischenkreis-Steller (401) unabhängig von den Gleichspannungsnetz-Spannungen (UG1, UG2, UA1) und den Gleichspannungsnetz-Strömen (IG1, IG2, IA1) einstellbar ist.

5. Gleichspannungswandler nach einem der vorhergehenden Ansprüche, **dadurch gekennzeichnet, dass** der Zwischenkreis-Steller (401) mit dem gemeinsamen Bezugspotential (X5) verbunden ist.

6. Gleichspannungswandler nach einem der vorhergehenden Ansprüche, **dadurch gekennzeichnet, dass** an dem Zwischenkreis-Steller (401) eine Gleichspannungsnetz-Spannung (UG1, UG2, UA1) anliegt und der Zwischenkreis-Steller (401) eine Potentialtrennung aufweist.

7. Gleichspannungswandler nach einem der Ansprüche 1 bis 5, **dadurch gekennzeichnet, dass** der Zwischenkreis-Steller (401) mit dem ersten Zwischenkreispotential (X3), dem zweiten Zwischenkreispotential (X4) und dem gemeinsamen Bezugspotential (X5) verbunden ist.

8. Gleichspannungswandler nach einem der Ansprüche 1 bis 5, **dadurch gekennzeichnet, dass** der Zwischenkreis-Steller (401) mit einem der Gleichspannungsnetzanschlüsse (X11, X12, X21), dem ersten Zwischenkreispotential (X3) und dem gemeinsamen Bezugspotential (X5) verbunden ist.

9. Gleichspannungswandler nach einem der Ansprüche 1 bis 5, **dadurch gekennzeichnet, dass** der Zwischenkreis-Steller (401) mit einem der Gleichspannungsnetzanschlüsse (X11, X12, X21), dem zweiten Zwischenkreispotential (X4) und dem gemeinsamen Bezugspotential (X5) verbunden ist.

10. Gleichspannungswandler nach einem der Ansprüche 7 bis 9, **dadurch gekennzeichnet, dass** der Zwischenkreis-Steller (401) als Halbbrückenschaltung ausgebildet ist.

11. Gleichspannungswandler nach einem der vorhergehenden Ansprüche, **dadurch gekennzeichnet, dass** die DC-DC-Steller (101, 102, 301) als Halbbrückenschaltungen ausgebildet sind.

12. Verfahren zum Betrieb eines Gleichspannungswandlers zur Kopplung von mindestens drei Gleichspannungsnetzen mit mindestens drei DC-DC-Stellern (101, 102, 301), die jeweils einen Gleichspannungsanschluss (X11, X12, X21) aufweisen, an dem eine auf ein gemeinsames Bezugspotential (X5) bezogene Gleichspannungsnetz-Spannung (UG1, UG2, UA1) anliegt und durch den ein Gleichspannungsnetz-Strom (IG1, IG2, IA1) geleitet wird, wobei die DC-DC-Steller (101, 102, 301) über einen ersten Zwischenkreiskondensator (C1) gekoppelt sind, welcher zwischen einem ersten Zwischenkreispotential (X3) und einem zweiten Zwischenkreispotential (X4) geschaltet ist, wobei das erste Zwischenkreispotential (X3) und das zweite Zwischenkreispotential (X4) von dem gemeinsamen Bezugspotential (X5) verschieden sind,
**dadurch gekennzeichnet, dass**
das erste Zwischenkreispotential (X3) und/oder das zweite Zwischenkreispotential (X4) unabhängig von den Gleichspannungsnetz-Spannungen (UG1, UG2, UA1) und den Gleichspannungsnetz-Strömen (IG1, IG2, IA1) über einen Zwischenkreis-Steller (401) eingestellt wird.

## Claims

1. A DC-to-DC converter for coupling at least three DC networks,
- having at least three DC-to-DC actuators (101, 102, 301), each of which has a DC network connection (X11, X12, X21), to which a DC system voltage (UG1, UG2, UA1) related to a common reference potential (X5) is applied and through which a DC system current (IG1, IG2, IA1) flows,
- wherein the DC-to-DC actuators (101, 102, 301) are coupled via a first intermediate circuit capacitor (C1), which is switched between a first intermediate circuit potential (X3) and a second intermediate circuit potential (X4), wherein the first intermediate circuit potential (X3) and the second intermediate circuit potential (X4) are different to the common reference potential (X5),
**characterised by**
an intermediate circuit actuator (401), via which the first intermediate circuit potential (X3) and/or the second intermediate circuit potential (X4) can be adjusted independently of the DC system voltages (UG1, UG2, UA1) and the DC system currents (IG1, IG2, IA1).

2. The DC-to-DC converter according to claim 1, **characterised in that** a second intermediate circuit capacitor (C2) is switched between the second intermediate circuit potential (X4) and the common reference potential (X5) or a third intermediate circuit capacitor (C3) is switched between the first intermediate circuit potential (X3) and the common reference potential (X5).

3. The DC-to-DC converter according to one of the preceding claims, **characterised in that**, for setting the first intermediate circuit potential (X3) and/or the second intermediate circuit potential (X4), a first intermediate circuit voltage (UC1) applied across the first intermediate circuit capacitor (C1) can be adjusted by the intermediate circuit actuator (401) independently of the DC system voltages (UG1, UG2, UA1) and the DC system currents (IG1, IG2, IA1).

4. The DC-to-DC converter according to claim 2, **characterised in that**, for setting the second intermediate circuit potential (X4), a second intermediate circuit voltage (UC2) can be adjusted between the second intermediate circuit potential (X4) and the common reference potential (X5) by the intermediate circuit actuator (401) independently of the DC system voltage (UG1, UG2, UA1) and the DC system currents (IG1, IG2, IA1) or that, for setting the first intermediate circuit potential (X3), a third intermediate circuit voltage (UC3) can be adjusted between the first intermediate circuit potential (X3) and the common reference potential (X5) by the intermediate circuit actuator (401) independently of the DC system voltages (UG1, UG2, UA1) and the DC system currents (IG1, IG2, IA1).

5. The DC-to-DC converter according to any one of the preceding claims, **characterised in that** the intermediate circuit actuator (401) is connected to the common reference potential (X5).

6. The DC-to-DC converter according to any one of the preceding claims, **characterised in that** a DC system voltage (UG1, UG2, UA1) is applied to the intermediate circuit actuator (401) and the intermediate circuit actuator (401) has electrical isolation.

7. The DC-to-DC converter according to any one of claims 1 to 5, **characterised in that** the intermediate circuit actuator (401) is connected to the first intermediate circuit potential (X3), the second intermediate circuit potential (X4) and the common reference potential (X5).

8. The DC-to-DC converter according to any one of claims 1 to 5, **characterised in that** the intermediate circuit actuator (401) is connected to one of the DC system connections (X11, X12, X21), the first intermediate circuit potential (X3) and the common reference potential (X5).

9. The DC-to-DC converter according to any one of claims 1 to 5, **characterised in that** the intermediate circuit actuator (401) is connected to one of the DC system connections (X11, X12, X21), the second intermediate circuit potential (X4) and the common reference potential (X5).

10. The DC-to-DC converter according to any one of claims 7 to 9, **characterised in that** the intermediate circuit actuator (401) is designed as a half-bridge circuit.

11. The DC-to-DC converter according to any one of the preceding claims, **characterised in that** the DC-to-DC actuators (101, 102, 301) are designed as half-bridge circuits.

12. A method for operating a DC-to-DC converter for coupling at least three DC networks, having at least three DC-to-DC actuators (101, 102, 301), each of which has a DC network connection (X11, X12, X21), to which a DC system voltage (UG1, UG2, UA1) related to a common reference potential (X5) is applied and through which a DC system current (IG1, IG2, IA1) is guided, wherein the DC-to-DC actuators (101, 102, 301) are coupled via a first intermediate circuit capacitor (C1), which is switched between a first intermediate circuit potential (X3) and a second intermediate circuit potential (X4), wherein the first intermediate circuit potential (X3) and the second intermediate circuit potential (X4) are different to the common reference potential (X5),
**characterised in that**
the first intermediate circuit potential (X3) and/or the second intermediate circuit potential (X4) is adjusted independently of the DC system voltages (UG1, UG2, UA1) and the DC system currents (IG1, IG2, IA1) via an intermediate actuator (401).

## Revendications

1. Convertisseur continu-continu destiné au couplage d'au moins trois réseaux à tension continue,
- comprenant au moins trois régleurs CC-CC (101, 102, 301), lesquels comportent respectivement une borne de réseau à tension continue (X11, X12, X21) à laquelle une tension de réseau à tension continue (UG1, UG2, UA1) liée à un potentiel de référence (X5) commun est appliquée et à travers laquelle circule un courant de réseau à tension continue (IG1, IG2, IA1),
- les régleurs CC-CC (101, 102, 301) étant couplés par l'intermédiaire d'un premier condensateur de circuit intermédiaire (C1), lequel est connecté entre un premier potentiel de circuit intermédiaire (X3) et un second potentiel de circuit intermédiaire (X4), le premier potentiel de circuit intermédiaire (X3) et le second potentiel de circuit intermédiaire (X4) étant différents du potentiel de référence (X5) commun,
**caractérisé par**
un régleur de circuit intermédiaire (401), par l'intermédiaire duquel le premier potentiel de circuit intermédiaire (X3) et/ou le second potentiel de circuit intermédiaire (X4) sont réglables indépendamment des tensions de réseau à tension continue (UG1, UG2, UA1) et des courants de réseau à tension continue (IG1, IG2, IA1).

2. Convertisseur continu-continu selon la revendication 1, **caractérisé en ce que**, entre le second potentiel de circuit intermédiaire (X4) et le potentiel de référence (X5) commun, un deuxième condensateur de circuit intermédiaire (C2) ou, entre le premier potentiel de circuit intermédiaire (X3) et le potentiel de référence (X5) commun, un troisième condensateur de circuit intermédiaire (C3) est connecté.

3. Convertisseur continu-continu selon l'une quelconque des revendications précédentes, **caractérisé en ce que**, pour régler le premier potentiel de circuit intermédiaire (X3) et/ou le second potentiel de circuit intermédiaire (X4), une première tension de circuit intermédiaire (UC1) appliquée au premier condensateur de circuit intermédiaire (C1) peut être réglée à l'aide du régleur de circuit intermédiaire (401) indépendamment des tensions de réseau à tension continue (UG1, UG2, UA1) et des courants de réseau à tension continue (IG1, IG2, IA1).

4. Convertisseur continu-continu selon la revendication 2, **caractérisé en ce que**, pour régler le second potentiel de circuit intermédiaire (X4), une deuxième tension de circuit intermédiaire (UC2), entre le second potentiel de circuit intermédiaire (X4) et le potentiel de référence (X5) commun, peut être réglée à l'aide du régleur de circuit intermédiaire (401) indépendamment des tensions de réseau à tension continue (UG1, UG2, UA1) et des courants de réseau à tension continue (IG1, IG2, IA1) ou **en ce que** pour régler le premier potentiel de circuit intermédiaire (X3), une troisième tension de circuit intermédiaire (UC3), entre le premier potentiel de circuit intermédiaire (X3) et le potentiel de référence (X5) commun, peut être réglée à l'aide du régleur de circuit intermédiaire (401) indépendamment des tensions de réseau à tension continue (UG1, UG2, UA1) et des courants de réseau à tension continue (IG1, IG2, IA1).

5. Convertisseur continu-continu selon l'une quelconque des revendications précédentes, **caractérisé en ce que** le régleur de circuit intermédiaire (401) est connecté au potentiel de référence (X5) commun.

6. Convertisseur continu-continu selon l'une quelconque des revendications précédentes, **caractérisé en ce qu'**une tension de réseau à tension continue (UG1, UG2, UA1) est appliquée au régleur de circuit intermédiaire (401) et le régleur de circuit intermédiaire (401) comporte une séparation de potentiel.

7. Convertisseur continu-continu selon l'une quelconque des revendications 1 à 5, **caractérisé en ce que** le régleur de circuit intermédiaire (401) est connecté au premier potentiel de circuit intermédiaire (X3), au second potentiel de circuit intermédiaire (X4) et au potentiel de référence (X5) commun.

8. Convertisseur continu-continu selon l'une quelconque des revendications 1 à 5, **caractérisé en ce que** le régleur de circuit intermédiaire (401) est connecté à l'une des bornes de réseau à tension continue (X11, X12, X21), au premier potentiel de circuit intermédiaire (X3) et au potentiel de référence (X5) commun.

9. Convertisseur continu-continu selon l'une quelconque des revendications 1 à 5, **caractérisé en ce que** le régleur de circuit intermédiaire (401) est connecté à l'une des bornes de réseau à tension continue (X11, X12, X21), au second potentiel de circuit intermédiaire (X4) et au potentiel de référence (X5) commun.

10. Convertisseur continu-continu selon l'une quelconque des revendications 7 à 9, **caractérisé en ce que** le régleur de circuit intermédiaire (401) est conçu sous la forme d'un circuit en demi-pont.

11. Convertisseur continu-continu selon l'une quelconque des revendications précédentes, **caractérisé en ce que** les régleurs CC-CC (101, 102, 301) sont conçus sous la forme de circuits en demi-pont.

12. Procédé de fonctionnement d'un convertisseur continu-continu destiné au couplage d'au moins trois réseaux à tension continue comportant au moins trois régleurs CC-CC (101, 102, 301), lesquels comportent respectivement une borne de réseau à tension continue (X11, X12, X21) à laquelle une tension de réseau à tension continue (UG1, UG2, UA1) liée à un potentiel de référence (X5) commun est appliquée et à travers laquelle un courant de réseau à tension continue (IG1, IG2, IA1) est conduit, les régleurs CC-CC (101, 102, 301) étant couplés par l'intermédiaire d'un premier condensateur de circuit intermédiaire (C1), lequel est connecté entre un premier potentiel de circuit intermédiaire (X3) et un second potentiel de circuit intermédiaire (X4), le premier potentiel de circuit intermédiaire (X3) et le second potentiel de circuit intermédiaire (X4) étant différents du potentiel de référence (X5) commun,
**caractérisé en ce que**
le premier potentiel de circuit intermédiaire (X3) et/ou le second potentiel de circuit intermédiaire (X4) sont réglés indépendamment des tensions de réseau à tension continue (UG1, UG2, UA1) et des courants de réseau à tension continue (IG1, IG2, IA1) par l'intermédiaire d'un régleur de circuit intermédiaire (401).
